Europäisches Patentamt

(19) European Patent Office

Office européen des brevets

(11) Veröffentlichungsnummer: **0 001 792**

A1

(12) # EUROPÄISCHE PATENTANMELDUNG

(21) Anmeldenummer: 78101189.5

(22) Anmeldetag: 21.10.78

(51) Int. Cl.²: **C 02 C 5/04**

(30) Priorität: 29.10.77 DE 2748638

(43) Veröffentlichungstag der Anmeldung:
16.05.79 Patentblatt 79/10

(84) Benannte Vertragsstaaten:
BE CH DE FR GB LU NL SE

(71) Anmelder: HOECHST AKTIENGESELLSCHAFT
Postfach 80 03 20
D-6230 Frankfurt/Main 80(DE)

(72) Erfinder: Paszthory, Emmerich, Dr.
Königsteiner Strasse 18
D-6238 Hofheim am Taunus(DE)

(72) Erfinder: Albers, Arnold, Dr.
Stroofstrasse 10
D-6230 Frankfurt/Main 80(DE)

(72) Erfinder: Ringel, Erich, Dr.
Sandweg 7
D-6233 Kelkheim Taunus(DE)

(72) Erfinder: Elinkmann, Hans-Gerd
Kallestrasse 6
D-6000 Frankfurt/Main(DE)

(54) Verfahren zur Aufbereitung von Abwasser.

(57) Das Abwasser wird in der Hitze mit Salpetersäure oder Nitraten vorbehandelt, die restlichen Verunreinigungen werden anschliessend durch biologischen Abbau entfernt.

EP 0 001 792 A1

Croydon Printing Company Ltd.

0001792

- 1 -

HOECHST AKTIENGESELLSCHAFT HOE 77/F 216          Dr.SP/wö

<u>Verfahren zur Aufbereitung von Abwasser</u>

Die vorliegende Anmeldung betrifft ein Verfahren zum naßoxidativen Abbau von Abwasser, das organische Verbindungen in gelöster oder suspendierter Form enthält. In der Industrie fallen häufig Abwässer an, die neben anorganischen Bestandteilen noch organische Stoffe enthalten. Insbesondere in der chemischen Industrie, so bei der Herstellung organischer Zwischenprodukte von Farbstoffen, von organischen Großprodukten wie Papier oder von Pflanzenschutzmitteln, entstehen häufig Abwässer, die gereinigt werden müssen. Für die Beseitigung der im Abwasser in gelöster oder suspendierter Form vorliegenden organischen Verbindungen sind eine ganze Reihe spezieller Verfahren bekannt geworden, so die Extraktion löslicher Stoffe, oder die Auftrennung des Abwassers durch Destillation. Überwiegend werden jedoch Abwässer, die biologisch abbaubare organische Stoffe enthalten, in biologischen Kläranlagen behandelt. Es ist jedoch bekannt, daß in manchen Fällen die organischen Verunreinigungen der Abwässer in den üblichen biologischen Kläranlagen von Bakterien nur langsam abgebaut werden ("biologisch inaktive Verbindungen") oder aber den Abbau anderer, an sich abbaubarer Substanzen hemmen ("biologisch toxische Verbindungen"). Dies gilt beispielsweise für phenolhaltige Abwässer und Abwässer aus der Produktion von Pflanzenschutzmitteln, insbesondere der Herstellung von Fungiziden.

Ein bekanntes Verfahren zum Abbau solcher biologisch nicht abbaubarer organischer Verbindungen besteht in der Naßverbrennung. Dabei wird das Abwasser in Gegenwart von sauerstoffhaltigen Gasen auf Temperaturen von etwa 250°C bis 350°C erhitzt. Ein Nachteil dieses Verfahrens besteht darin, daß für die Eindosierung des Sauerstoffs unter hohem Druck eine aufwendige Apparatur notwendig ist und daß relativ große Mengen an Sauerstoff gebraucht werden.

Es bestand daher die Aufgabe, ein Verfahren zu finden, das die Nachteile dieses Verfahrens nicht zeigt und insbesondere in der Lage ist, solche Abwässer, die nicht biologisch abbaubar sind, d.h. toxische oder biologisch inaktive Bestandteile enthalten, soweit zu reinigen, daß anschließend eine biologische Reinigung möglich ist.

Es wurde nun ein neues Verfahren zum naßoxidativen Abbau von Abwasser gefunden, das in gelöster oder suspendierter Form organische Verbindungen enthält, die biologisch toxisch und/oder inaktiv sind. Das Verfahren ist dadurch gekennzeichnet, daß man das Abwasser mit Salpetersäure oder löslichen Nitraten versetzt und auf 100 bis 250°C aufheizt. Eine bevorzugte Obergrenze für die Temperatur der Abwasserbehandlung liegt bei 230°C, insbesondere 220°C. Das Verfahren wird bevorzugt bei Temperaturen über 120°C, insbesondere über 140°C, vorzugsweise über 180° durchgeführt. Unter löslichen Nitraten sind dabei anorganische Salze, insbesondere Salze der Alkalimetalle oder Erdalkalimetalle wie $NaNO_3$ und $Ca(NO_3)_2$ zu verstehen.

BAD ORIGINAL

Das erfindungsgemäße Verfahren ist zwar auch noch bei Temperaturen oberhalb 250°C wirksam; jedoch wird mit steigender Temperatur das Gefäßmaterial (Tantal, VA-Stahl, Emaille) immer stärker angegriffen. Ferner wird mit steigendem Druck der kunstruktive Aufwand immer höher.

Das Verfahren eignet sich besonders für die Aufarbeitung von Produktionsabwässern, die aus der Herstellung von Pflanzenschutzmitteln, insbesondere von Fungiziden herrühren. Es ist dabei überraschend, daß geringe Mengen Salpetersäure gerade die biologisch toxischen Bestandteile des Abwassers zerstören, während die biologisch abbaubaren Bestandteile noch im wesentlichen erhalten bleiben. Falls das Abwasser nennenswerte Mengen an flüchtigen Lösungsmitteln (z.B. Benzol, Toluol, Xylol) enthält, kann es sinnvoll sein, durch Abdestillieren von Wasser die Hauptmenge des Lösungsmittels zu entfernen (gegebenenfalls zurückzugewinnen) und damit auch die Einsatzmenge an $HNO_3$ bzw. an Nitraten zu verringern. Das Abwasser kann neben organischen Bestandteilen noch anorganische Bestandteile wie Natriumsulfat, Schwefelsäure oder Ammonsalze enthalten. Ammonsalze werden beim erfindungsgemäßen Verfahren teilweise abgebaut. Der Grad ihres Abbaus hängt in der Hauptsache von der eingesetzten Menge an Salpetersäure ab. In erster Näherung wird dabei zur Zerstörung von einem Äquivalent Ammoniumionen ein Mol Salpetersäure benötigt. Bevorzugt sind Abwässer, die maximal 10Gew.-% Säure (gerechnet als $H_2SO_4$) enthalten. Der pH-Wert des eingesetzten Abwassers ist nicht kritisch. Es lassen sich sowohl saure wie neutrale aber auch alkalische Abwässer aufarbeiten. Das gilt auch bei Einsatz von löslichen Nitraten. Das erfindungsgemäße Verfahren eignet sich besonders für solche Abwässer, deren CSB-Wert höchstens 100 g $O_2$ pro Liter, insbesondere aber mindestens 5 g $O_2$ pro Liter beträgt. Bereits geringe Mengen an Salpetersäure reichen aus, um die Abwässer wieder biologisch abbaubar zu machen. Je nach der Menge und der Natur der Verunreinigungen reichen Zusätze von 1 bis 10, insbeso

dere 1,5 bis 8, vorzugsweise 2 bis 5 Gew.-% Salpetersäure (wasserfrei) aus. An Stelle von $HNO_3$ kann auch die äquivalente Menge an Nitraten verwendet werden.

Bei Zugabe von größeren Mengen an Oxidationsmitteln kann das erfindungsgemäße Verfahren zu einem nahezu totalen Abbau sämtlicher organischer Produkte sowie auch der Ammoniumionen führen. Hierfür sind aber (proportional dem gemessenen CSB-Wert) entsprechend größere stöchiometrische Mengen an Salpetersäure bzw. deren Salzen notwendig. Es ist vorteilhaft das Verfahren so durchzuführen, daß mit geringen Mengen Salpetersäure oder Nitrat im wesentlichen nur die biologisch toxischen Verbindungen abgebaut werden. Das anfallende Abwasser kann anschließend einer biologischen Reinigung nach dem Belebtschlamm-Verfahren zugeführt werden. In manchen Fällen ist das bei der Oxydation anfallende Abwasser so rein, daß es erneut als Prozeßwasser eingesetzt werden kann.

Das erfindungsgemäße Verfahren kann sowohl kontinuierlich (beispielsweise in einem Röhrenreaktor) als auch diskontinuierlich (z.B. im Chargenbetrieb) durchgeführt werden.

Die folgenden Beispiele erläutern das Verfahren.

Beispiel 1

Bei der Herstellung des Fungizids 2-Carbomethoxyaminobenzimidazol fällt ein Produktionsabwasser an, das biologisch toxisch ist, also für eine biologische Abwasseraufbereitung nicht geeinget ist.

Das Abwasser ist dunkelbraun und enthält dunkel gefärbte Flocken. Der Gehalt an 2-Caromethoxyamino-benzimidazol liegt bei ca. 10 ppm. Der pH-Wert beträgt 4,2, der CSB-Wert 50 000 mg $O_2$/l. (Der CSB-Wert gibt den chemischen Sauerstoffbedarf, gerechtnet als mg $O_2$/l an, der erforderlich ist, um die organischen Verbindungen vollständig

zu $CO_2$ und $H_2O$ zu oxidieren. Die Bestimmung des CSB-Wertes erfolgt nach einer standardisierten Methode mittels $K_2Cr_2O_7$ in verdünnter Schwefelsäure in Gegenwart von $Ag^+$-ion).

In einem Druckbehälter (Volumen 3 $m^3$), der mit Tantal plattiert ist, werden 2 $m^3$ des oben genannten Abwassers mit 60 kg Salpetersäure (Gehalt 65 %) versetzt und auf 195°C hochgeheizt. Die Temperatur der Mischung steigt weiter bis auf etwa 212°C (Druck: 20 bar). Nach dem Erreichen dieser Temperaturspitze wird der Ansatz sofort abgekühlt.

Das so erhaltene Abwasser ist hellgelb klar bis rotbraun gefärbt und praktisch geruchlos. Der CSB-Wert beträgt 33 000 mg $O_2$/l, der BSB$_5$-Wert 19 000 mg $O_2$/l, der pH-Wert 7,8. In einer Verdünnung von 1 : 200 ist das so behandelte Abwasser nicht fischtoxisch.

Beispiel 2

In ein mit Tantal ausgekleidetes Strömungsrohr mit 50 mm Innendurchmesser werden gleichzeitig und gleichmäßig 30 kg/h Salpetersäure 65 % sowie 500 l/h des in Beispiel 1 beschriebenen Abwassers eindosiert und mit direktem Dampf hochgeheizt. Das Volumen des Strömungsrohrs betrug 40 l. Der Druck des Synstems wurde durch ein Druckhalteventil auf 32 bar eingestellt, was einer Temperatur von 212 bis 215°C entspricht.

Das kontinuierlich abgenommene Abwasser ist hellgelb gefärbt, hat einen CSB-Wert von 14 000 mg $O_2$/l, einen BSB$_5$-Wert 8 800 mg $O_2$/l und einen pH-Wert von etwa 1,0.

Das so behandelte Abwasser ist biologisch nicht mehr toxisch und kann daher einer biologischen Abwasserreinigung zugeführt werden.

## Beispiel 3

Beispiel 1 wurde wiederholt, jedoch wurde nur 25 kg Salpetersäure eingesetzt und der Ansatz nur auf 180 bis 185°C hochgeheizt.

Nach dem Abkühlen des Behälterinhaltes wird ein Abwasser erhalten, daß einen CSB-Wert von 40 000 mg $O_2$/l, einen $BSB_5$-Wert von 20 000 mg $O_2$/l und einen pH-Wert von 7,0 aufweist. Das Abwasser ist nicht mehr fischtoxisch.

## Beispiel 4

Bei der Herstellung von 1-Phenyl-semicarbazid aus Phenylhydrazin, Harnstoff und Wasser fällt ein Abwasser an, daß wegen seines Phenylhydrazingehaltes (ca. 0,05 %) toxisch und biologisch nicht abbaubar ist.

Der CSB-Wert beträgt 37 000 mg $O_2$/l, der Gehalt an Ammoniumchlorid 15 %, der pH Wert 6,2.

2 000 l dieses Abwassers werden mit 80 kg Salpetersäure wie in Beispiel 1 beschrieben, bei 210°C behandelt. Das erhaltene Abwasser weist einen CSB-Wert von 14 500 mg $O_2$/l, einen $BSB_3$-Wert von 9 000 mg $O_2$/l und einen pH-Wert von 5,0 auf. Der Phenylhydrazingehalt liegt unter 1 ppm, der Ammonchloridgehalt bei 11 %.

Das so behandelte Abwasser läßt sich gut in einer biologischen Abwasseranlage aufbereiten. Es läßt sich aber auch als Prozeßwasser bei der Herstellung von 1-Phenyl-semicarbazid wieder einsetzen.

## Beispiel 5

Bei der Behandlung von Cellulose im alkalischen Bereich mit Äthylenoxid ein Abwasser an, daß neben hochmolekularen Bestandteilen noch ca. 0,3 % Glykole in gelöster Form enthält. Der CSB-Wert beträgt 33 100 mg $O_2$/l, der pH-Wert 8,7, der Gesamt-Kohlenstoffgehalt 9 000 mg C/l. In einer Verdünnung von 1:100 läßt sich das Abwasser biologisch abbauen. Aus dem dabei gefundenen Sauerstoff-Verbrauch errechnet sich ein $BSB_5$-Gehalt von 27 500 mg $O_2$/l.

2 l dieses Abwassers und 20 g/l Salpetersäure 65 %ig wurden in einer Tantalbombe in 50 Minuten *) aufgeheizt und 1 Stunde bei dieser Temperatur gehalten. Der Enddruck betrug ca. 40 bar. Die Bombe wurde innerhalb von 3 Stunden mit Kaltluft auf 86°C gekühlt und dann entleert. Das behandelte Abwasser wies einen pH-Wert von 2,9, einen CSB-Wert von 22 800 mg $O_2$/l und einen $BSB_5$ von 14 800 mg $O_2$/l auf. Es ist auch ohne Verdünnung biologisch abbaubar. Gesamtkohlenstoffgehalt 5 530 mg C/l.

*) auf 250°C

Beispiel 6

Beispiel 5 wird wiederholt, jedoch werden 2 l Abwasser mit 40 g/l Salpetersäure behandelt. Die gefüllte Bombe wird in 30 Minuten auf 215°C und 1 Stunde bei dieser Temperatur gehalten (Druck: 24 bar). Die Bombe wird innerhalb von 3 1/2 Stunden abgekühlt und dann entleert. Das Abwasser weist einen pH-Wert von 2,6, einen CSB-Wert von 18 150 mg $O_2$/l und einen $BSB_5$-Wert von 14 100 mg $O_2$/l auf. Das so behandelte Abwasser kann direkt einer biologischen Reinigungsanlage zugeführt werden.

Beispiel 7

Wenn 2 l des Abwassers von Beispiel 5 nur mit 10 g/l Salpetersäure nach dem Verfahren von Beispiel 6 behandelt werden, so fällt ein Abwasser an, dessen CSB-Wert 26 400 mg $O_2$/l und dessen $BSB_5$-Wert 24 750 mg $O_2$/l beträgt. Auch dieses Abwasser kann direkt einer biologischen Abwasserreinigungsanlage zugeführt werden.

0001792

Beispiel 8

Beispiel 5 wurde wiederholt, jedoch wurde anstelle von
Salpetersäure Natriumnitrit (8,8 g/l) eingesetzt. Nach
Zugabe des Natriumnitrits lag der pH-Wert der Lösung bei
8,7, nach der Oxydation bei $215^{\circ}C$ bei ca. 4,1. Der
CSB-Wert betrugt 26 250 mg $O_2$/l.

Patentansprüche:

1. Verfahren zum naßoxidativen Abbau von Abwasser, das toxische und/oder biologisch inaktive organische Verbindungen in gelöster oder suspendierter Form enthält, bei erhöhter Temperatur, dadurch gekennzeichnet, daß man das Abwasser mit Salpetersäure oder löslichen Nitraten versetzt und auf Temperaturen von 100 bis 250°C aufheizt.

2. Verfahren nach Anspruch 1, dadurch gekennzeichnet, daß man auf Temperaturen von 180 bis 220°C aufheizt.

3. Verfahren nach Anspruch 1, dadurch gekennzeichnet, daß man das behandelte Abwasser nach der Oxidation abkühlt und einem biologischen Abbau der Restverunreinigungen nach dem Belebtschlamm-Verfahren unterwirft.

4. Verfahren nach Anspruch 1, dadurch gekennzeichnet, daß man die Menge an Salpetersäure oder Nitrat so bemißt, daß die chemisch abbaubaren Stoffe nur zum Teil abgebaut werden.

5. Verfahren nach Anspruch 1, dadurch gekennzeichnet, daß man ein Produktionsabwasser aufarbeitet, das bei der Herstellung organischer Zwischenprodukte oder Endprodukte anfällt.

6. Verfahren nach Anspruch 5, dadurch gekennzeichnet, daß das Abwasser aus der Herstellung von Pflanzenschutzmitteln stammt, insbesondere der Herstellung von Fungiziden.

7. Verfahren nach Anspruch 6, dadurch gekennzeichnet, daß das eingesetzte Abwasser 2-Carbomethoxy-benz-imidazol enthält.

**Europäisches Patentamt**

**EUROPÄISCHER RECHERCHENBERICHT**

Nummer der Anmeldung

EP 78 10 1189

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe. soweit erforderlich, der maßgeblichen Teile | betrifft Anspruch | C 02 C 5/04 |
| X | FR - A - 2 164 894 (STAMICARBON)<br>* Seite 14, Ansprüche 1,8,9; Seite 6, Absatz 2; Seite 7, Absatz 1; Seite 8, Zeilen 26-33 * | 1,5 | |
| | --- | | |
| A | DE - A - 2 220 385 (DU PONT) | | |
| A | US - A - 3 984 311 (R.W. DIESEN et al.) | | |
| A | US - A - 3 977 966 (PRADT et al.) | | RECHERCHIERTE SACHGEBIETE (Int. Cl.²) |
| A | FR - A - 559 515 (CHEMISCHE WERKE) | | C 02 C 5/04 |
| | ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-02-1979 | TEPLY |

EPA form 1503.1 06.78